(19) Europäisches Patentamt / European Patent Office / Office européen des brevets

(11) **EP 3 535 518 B1**

(12) **FASCICULE DE BREVET EUROPEEN**

(45) Date de publication et mention
de la délivrance du brevet:
**28.07.2021 Bulletin 2021/30**

(21) Numéro de dépôt: **17797406.0**

(22) Date de dépôt: **24.10.2017**

(51) Int Cl.:
**F16L 53/00** *(2018.01)*          **H05B 6/10** *(2006.01)*
**F16L 53/34** *(2018.01)*

(86) Numéro de dépôt international:
**PCT/FR2017/052930**

(87) Numéro de publication internationale:
**WO 2018/083396 (11.05.2018 Gazette 2018/19)**

(54) **PROCÉDÉ ET DISPOSITIF DE CHAUFFAGE PAR INDUCTION D'UNE CONDUITE INTERNE D'UN ENSEMBLE DE CONDUITES COAXIALES**

VERFAHREN UND VORRICHTUNG ZUR INDUKTIONSERWÄRMUNG EINES INNENROHRS EINER ANORDNUNG VON KOAXIALROHREN

METHOD AND DEVICE FOR INDUCTION HEATING OF AN INNER PIPE OF AN ASSEMBLY OF COAXIAL PIPES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.11.2016 FR 1660717**

(43) Date de publication de la demande:
**11.09.2019 Bulletin 2019/37**

(73) Titulaire: **SAIPEM S.A.**
**78180 Montigny Le Bretonneux (FR)**

(72) Inventeurs:
• **PIONETTI, François-Régis**
**50450 La Baleine (FR)**
• **SUNDERMANN, Axel**
**91640 Fontenay-Les-Briis (FR)**
• **MAJDOUB, Taoufik**
**93000 Bobigny (FR)**
• **AGOUMI, Jalil**
**94270 Le Kremlin-Bicetre (FR)**

(74) Mandataire: **Cabinet Beau de Loménie**
**158, rue de l'Université**
**75340 Paris Cedex 07 (FR)**

(56) Documents cités:
GB-A- 2 531 026       US-A- 4 595 607
US-B1- 6 278 095     US-B1- 6 278 096

**Description**

Arrière-plan de l'invention

La présente invention se rapporte au domaine général du chauffage des conduites métalliques de transport de fluides, et en particulier des conduites sous-marines reposant au fond de la mer et assurant une liaison entre des puits de production d'hydrocarbures sous-marins, notamment de pétrole et de gaz, et une installation de surface, par exemple une unité flottante de production, de stockage et de déchargement.

Dans un même champ de production d'hydrocarbures offshore, il est courant d'exploiter plusieurs puits qui peuvent être séparés les uns des autres de plusieurs kilomètres, voire dizaines de kilomètres. Les fluides issus de ces différents puits doivent être collectés par des conduites sous-marines métalliques (typiquement en acier) posées au fond de la mer et transférés par des conduites de liaison fond/surface vers une installation de surface, par exemple un navire ou un point de collecte terrestre, qui va les recueillir pour les stocker (et éventuellement les traiter).

Les fluides issus des puits de production ont tendance à se refroidir très rapidement en parcourant les nombreux kilomètres de conduites sous-marines. Or, si aucune disposition n'est prise pour conserver une température de seuil minimale à l'intérieur de ces conduites, le risque est important que les molécules de gaz, notamment le méthane, contenus dans les fluides transportés se combinent aux molécules d'eau pour former, à basse température inférieures à 20°C, des cristaux d'hydrates. Ces derniers peuvent coller aux parois, s'y agglomérer et conduire à la formation de bouchons capables de bloquer la circulation des fluides à l'intérieur des conduites. De même, la solubilité dans le pétrole des composés à haut poids moléculaires, comme les paraffines ou les asphaltènes, diminue lorsque la température baisse, ce qui donne naissance à des dépôts solides capables eux-aussi de bloquer la circulation. Ces hydrates peuvent boucher la conduite irréversiblement si une longueur trop importante de ligne descend trop bas en température. Ce problème peut apparaître dans deux cas principaux :

- l'arrêt de la production offshore, et
- sur des lignes de production ou transport offshore très longues.

L'une des solutions connues pour tenter de remédier à ce problème consiste à chauffer les conduites grâce à des câbles électriques, ronds ou plats, qui sont enroulés autour des conduites en acier sur toute leur longueur pour chauffer ces conduites par effet Joule. La puissance électrique qui est fournie aux câbles électriques provient d'un générateur électrique externe raccordé aux câbles par un ombilical. Cette solution de chauffage électrique qui est appelée « chauffage par traçage » ou « chauffage tracé » (« heat tracing » en anglais) permet de maintenir les fluides transportés dans les conduites à une température supérieure à un seuil critique sur tout leur trajet depuis le puits de production jusqu'à l'installation de surface.

On connait dans US6278096B1, US2013098625A1, US2013220996A1, US2014305613A1 et US2012031621A1, des procédés de chauffage de l'intérieur d'une conduite ou tube simple à l'aide d'une bobine d'induction électromagnétique disposée autour de la conduite ou tube simple. Pour les applications dans l'offshore, l'élément à chauffer est toujours une conduite de fluide conductrice, la plupart du temps en acier ferromagnétique. La conduite chauffe ensuite le fluide transporté par divers phénomènes de transferts thermiques. En pratique, dans l'état de l'art du chauffage à induction d'une conduite simple, on met en œuvre un courant électrique de fréquence supérieure à 1 kilo-Hertz. La bobine parcourue par ce courant électrique crée un champ magnétique qui induit des courants de Foucault lesquels - dans le chauffage par induction classique, se répartissent sur la surface de la conduite à chauffer sur une épaisseur de l'ordre de 1mm. Le reste du tube et les éléments à l'intérieur du tube sont chauffés indirectement par des effets de transferts thermiques. Dans le cas du chauffage par induction selon l'état de l'art la puissance dégagée par effet joule sur une couche de 1mm ou moins sur la paroi externe du tube acier augmente proportionnellement au carré du courant parcourant l'inducteur et au carré de la fréquence de ce courant.

Dans US 6 278 096, on réalise le chauffage d'un revêtement thermoplastique isolant électrique sur la surface externe d'une conduite simple (et non pas d'un ensemble de deux conduites coaxiales de type PIP), au niveau de la soudure entre deux segments de conduites, par chauffage par induction de l'épaisseur de paroi de la conduite dont le revêtement thermoplastique est à réparer.

US 6 278 095 concerne le chauffage de courts segments de conduites simples (« Single Heated Insulated Pipeline » SHIP) dénommés « jumpers » (voir colonne 3 lignes 19 à 22). Il s'agit ici de pallier l'absence de revêtement contenant des câbles de chauffage électrique par effet de Joule, au niveau de dits « jumpers » assurant la jonction entre deux parties de conduites comprenant de tels revêtements comprenant des câbles de chauffage électrique en réalisant un chauffage par induction à l'aide d'une bobine d'induction entourant le dit jumper.

La présente invention se rapporte plus précisément aux ensembles de deux conduites sous-marines coaxiales de type « Pipe In Pipe » ou PIP, c'est-à-dire « conduite dans une conduite », dans laquelle un tube interne transporte les fluides et un tube externe coaxial au précédent, appelé aussi « enveloppe externe », est en contact avec le milieu ambiant, c'est-à-dire avec l'eau. L'espace annulaire entre les deux tubes peut être rempli d'un matériau isolant ou encore être vidé de tout gaz de façon à assurer une isolation thermique pour les fluides circulant dans le conduit interne. De telles conduites coaxiales sous-marines sont particulièrement utilisées dans le cadre d'installations par grandes profondeurs où la température de l'eau est typiquement de 4°C et où les fluides dans les lignes doivent être impérativement maintenus à des températures supérieures à 20°C pour éviter la formation d'hydrates.

Dans l'état de l'Art du chauffage par induction de conduites sous-marines, on ne décrit pas la mise en œuvre d'un chauffage par induction de la conduite interne de deux conduites coaxiales de type « Pipe In Pipe » ou PIP. Pour chauffer le tube interne d'une conduite du type PiP depuis une bobine d'induction disposée autour du tube externe, le champ magnétique doit pouvoir traverser le tube externe, il faut pour cela que la fréquence de fonctionnement de la bobine source de champ magnétique soit telle que la profondeur caractéristique de pénétration du champ magnétique (aussi nommé profondeur de peau) dans le tube externe soit supérieure à son épaisseur pour atteindre le tube interne. Cela se fait en réduisant la fréquence. Mais, Il faut d'un autre côté maintenir cette fréquence la plus élevée possible pour maximiser la puissance de l'effet Joule induit dans les éléments à chauffer à l'intérieur du tube externe. C'est pourquoi, il est impossible par les méthodes d'induction conventionnelles de chauffer le tube interne d'un « pipe in pipe » comprenant un tube acier épais dans un autre tube acier épais tel qu'utilisé dans l'industrie pétrolière offshore, par induction via un champ magnétique variable créé depuis l'extérieur du tube externe. En effet, une conduite en acier ferromagnétique telle que mise en œuvre (notamment en termes de conductivité et perméabilité magnétique) épaisse d'environ 10mm ou plus comme celle du tube externe d'une conduite sous-marine PiP constitue une barrière pour le chauffage par induction du tube interne à partir d'un courant de moyenne ou haute fréquence supérieure à 1kHz car la profondeur de pénétration du champ magnétique dans ce matériau est alors faible, de l'ordre du mm au maximum pour de l'acier. Le champ magnétique ne traverse donc pas la barrière du tube externe, toute l'énergie étant dissipée dans celle-ci. Le chauffage par induction classique ne permet donc pas le chauffage par induction d'éléments conducteurs à travers une telle barrière.

Cependant, on a découvert selon la présente invention qu'il était possible de déterminer des conditions optimales de mise en œuvre d'un chauffage par effet Joule de courants induits par induction électromagnétique dans la paroi en acier de la conduite interne pour chauffer la conduite interne isolée thermiquement d'une conduite PiP sous-marine dont la conduite externe est en acier. La chaleur est alors immédiatement transmise par transfert thermique à l'intérieur de la conduite et permet d'empêcher la formation d'hydrate ou de faire fondre les hydrates déjà présents dans la conduite interne d'un PiP en mer profonde à 4°C.

En pratique, on estime qu'il suffit de chauffer la conduite interne et l'intérieur de la conduite interne à pas plus de 20°C au-dessus de la température environnante de l'eau pour désagréger les hydrates et/ou empêcher leur formation. D'autre part, compte tenu des épaisseurs des dites conduites internes et conduites externes, de la capacité thermique des aciers des conduites usuelles en offshore et de l'isolation thermique annulaire des conduites interne de pipe in pipe généralement utilisé par l'industrie pétrolière offshore, la température d'une conduite interne chaude de plus que 40°C ne descend pas en dessous de 20°C en 24h dans un environnement du PIP à 4°C.

Or, selon la présente invention, on a découvert qu'avec une bobine d'induction électromagnétique entourant la conduite externe en acier parcourue par un courant de fréquence basse dans une fourchette de basse fréquence de 0.1 à 10Hz et pour laquelle le rendement énergétique est maximal (en termes de perte par effet joule dans la conduite interne en acier), on obtient une puissance utile de chauffe de la conduite interne par effet joule suffisante de 1kW à 200kW par machine pour chauffer une telle conduite interne et ainsi élever la température de la conduite interne jusqu'à 40°C dans un environnement à 4°C à raison d'au moins 100m/jour voire jusqu'à 10km/jour selon le diamètre de la conduite interne et selon les propriétés physiques du contenu à chauffer, notamment pour des conduites interne de diamètre et épaisseurs standards soit des diamètres externes de conduite interne de 2" à 12". Pour des épaisseurs de conduites internes et conduites externes de 10 à 30 mm, d'épaisseur d'isolation thermique tel que décrite ci-dessus, avec une conduite externe d'épaisseur inférieure ou égale à celle de la conduite interne et si le tube interne est rempli d'eau ou d'un fluide de capacité thermique inférieure à celle de l'eau on estime pouvoir déboucher jusqu'à 10km/jour/machine de ligne PIP de tube interne de diamètre externe inférieur à 4" et jusqu'à 1.5km/jour/machine de tube interne de diamètre externe inférieur à 12" avec un système nécessitant une alimentation électrique en topside de puissance inférieure au MW.

Ceci permet de maintenir une conduite interne de n km au-dessus de +20°C par rapport à la température ambiante pendant 24h en déplaçant le dispositif de chauffage autour de la conduite à une vitesse de n km/jour, notamment lors d'un redémarrage de la production après un temps d'arrêt ayant conduit à des bouchages de conduite par des hydrates solidifiés.

Plus précisément, la présente invention fournit un procédé de chauffage selon la revendication 1.

Le chauffage par induction fonctionne indépendamment du fait que la conduite interne soit isolée thermiquement, mais le chauffage selon l'invention est plus efficace et aisé si la conduite interne est isolée. Plus particulièrement, la bobine d'induction électromagnétique génère un champ magnétique de valeur H d'au moins 0,1 Tesla de préférence de 0.1 à 0.2 Tesla avec un courant de fréquence optimale entre 1Hz à 10Hz pour obtenir une puissance de chauffe de la conduite interne de 1 à 200kWde préférence d'au moins 5 kW.

Plus particulièrement encore, ces valeurs de champ et de puissance sont appropriées pour des conduites présentant les caractéristiques suivantes :

- le diamètre externe de dite conduite interne est de 5 à 40cm,
- le diamètre externe de dite conduite externe est de 7.5 à 50cm,
- les épaisseurs des dites conduite interne et conduite externe sont de 10 à 30 mm, la conduite externe étant de préférence d'épaisseur du même ordre de grandeur que celle de la conduite interne.

Les valeurs de champ et de courant sont appropriées quel que soit le diamètre de conduite. Mais la puissance permettant de générer le courant nécessaire au chauffage augmente quand le diamètre à chauffer augmente.

Plus particulièrement encore, le procédé selon l'invention est mis en œuvre lors du redémarrage d'une conduite sous-marine après un arrêt de production exposant à un risque de formation de bouchons d'hydrates afin de détruire les dits bouchons. Pour ce faire, on chauffe la conduite interne d'un ensemble de deux conduites coaxiales sous-marines de type PIP pour maintenir sa température à au moins 20°C au-dessus de la température de l'eau environnant la conduite externe et ce pour une durée donnée de préférence d'au moins 24h.

De préférence, on chauffe la conduite interne à 40°C, les conduites interne et externe en acier présentant les caractéristiques de capacité thermique des aciers des conduites et d'isolation thermique de l'espace annulaire entre les conduite interne et externe telles que la durée de refroidissement de 40°C à 20°C est d'au moins 24h.

Dans un premier mode de réalisation, on met en œuvre un dispositif mobile de chauffage par induction comprenant au moins une dite bobine d'induction électromagnétique entourant coaxialement la conduite externe, et on déplace ledit dispositif mobile de chauffage le long dudit ensemble des conduites coaxiales, de préférence à une vitesse d'au moins 1 km/jour.

Plus particulièrement, on chauffe la conduite interne à une température T2 avec un dispositif mobile de chauffage par induction comprenant une dite bobine d'induction électromagnétique entourant coaxialement la conduite externe, et on déplace ledit dispositif mobile de chauffage à une vitesse d'au moins n km/jour de sorte que la température de la conduite interne d'une longueur donnée de conduite reste supérieure à T1 inférieure à T2, T2-T1 étant supérieure à la diminution de température de la conduite interne en une journée.

Plus particulièrement encore, T1 est supérieure à 20°C et T2 est supérieure à 40°C.

Plus particulièrement, on effectue les étapes suivantes dans lesquelles :

a) on soulève une portion de conduites coaxiales reposant sur le sol marin la dite portion de conduite comprenant au moins une dite bobine d'induction disposée coaxialement autour de la conduite externe, et

b) on déplace un dispositif mobile de chauffage par induction comprenant au moins une dite bobine d'induction électromagnétique en déplacement relatif le long et par rapport aux dites conduites coaxiales avec progression du déplacement concomitant d'une nouvelle portion surélevée de conduites coaxiales.

Dans un mode de réalisation, on met en œuvre un dispositif amovible de chauffage par induction apte à être appliqué sur des conduites coaxiales reposant au fond de la mer, comprenant une dite bobine d'induction électromagnétique comprenant deux parties de bobines demies-cylindriques indépendantes aptes à être solidarisées pour former une bobine coaxiale entourant la dite conduite externe en soulèvement par rapport au sol marin.

La présente invention fournit également un dispositif de chauffage par induction d'une conduite interne de conduites coaxiales utile dans un procédé selon l'invention comprenant :

- des moyens de chauffage par induction comprenant au moins une bobine d'induction électromagnétique entourant coaxialement la conduite externe de conduites coaxiales, et
- des moyens de soulèvement au-dessus du sol marin d'une portion de conduites coaxiales ainsi que de la (ou des) dite(s) bobine(s) d'induction l'entourant.

Dans un mode de réalisation, il s'agit d'un dispositif mobile comprenant en outre :

- des moyens de déplacement motorisé aptes à permettre le déplacement relatif de la (ou des) dite(s) bobine(s) d'induction coaxialement le long de la conduite externe des conduites coaxiales, et
- des dits moyens de soulèvement au-dessus du sol marin d'une portion de conduites coaxiales ainsi que de la (ou des) dite(s) bobine(s) d'induction l'entourant et dits moyens de déplacement motorisé.

Plus particulièrement encore, les moyens de soulèvement comprennent des bouées que l'on peut ballaster ou déballaster de manière contrôlée.

Plus particulièrement encore, les moyens de déplacement motorisé comprennent des dispositifs à chenilles aptes à venir en appui contre la conduite externe et ainsi se déplacer le long de la conduite externe lorsqu'ils sont actionnés, la dite bobine coulissant coaxialement relativement à la dite conduite externe.

Plus particulièrement encore, les dits moyens de soulèvement comprennent des roulettes supportant la conduite externe et aptes à coulisser relativement à ladite conduite externe lorsque les dits moyens de déplacement motorisé sont actionnés; les dites roulettes dites bobines et dites chenilles étant suspendues à des bouées.

Plus particulièrement encore, les dits moyens de soulèvement et les dites bobines, et dits moyens de déplacement motorisé, sont aptes à être solidarisés entre eux et supportés par une structure-support commune.

Dans un mode de réalisation, ledit dispositif de chauffage par induction est amovible et apte à être appliqué sur des conduites coaxiales reposant au fond de la mer comprenant une dite bobine d'induction électromagnétique comprenant deux parties de bobines demies-cylindriques indépendantes aptes à être solidarisées pour former une bobine coaxiale entourant la dite conduite externe.

Plus particulièrement encore, les deux parties de bobines demies-cylindriques indépendantes sont montées aptes à être déplacées en translation relative l'une par rapport à l'autre dans la direction transversale perpendiculaire à la direction longitudinale des dites conduites et dite bobine pour permettre de les installer sur une conduite en soulèvement par rapport au sol marin pour former une bobine coaxiale entourant la dite conduite externe.

De préférence, on choisit une bobine de longueur suffisamment longue, de préférence de longueur d'au moins 5 fois son diamètre, placée autour du tube externe. On peut alors considérer que l'on a un système axisymétrique invariant par translation suivant l'axe de coaxialité des tubes et de la bobine. La puissance utile est proportionnelle au carré du champ magnétique H=NI/L généré dans l'inducteur. N étant le nombre de spires, L la longueur de l'inducteur et I le courant parcourant chaque spire

On obtient un plus grand rendement ou efficacité énergétique si la section de la conduite interne (e2x 2 $\pi$ r2) est plus importante que celle de la conduite externe (e1x 2 $\pi$ r1).

On peut chauffer à de plus hautes températures si on ralentit l'avance. La température maximum dépend alors des caractéristiques thermiques de l'isolation thermique du tube (Uvalue), de son diamètre et de la puissance utile. Pour les conduites avec une Uvalue de l'ordre de 1W/m$^2$/K on pourrait chauffer à plusieurs centaines de degrés sans problèmes.

La fréquence que l'on utilise se situe toujours entre 0Hz et 50Hz. Elle dépend de l'épaisseur de la barrière (le tube externe), de la conductivité électrique du matériau constituant les tubes, et de leur perméabilité magnétique. Elle vaut en ordre de grandeur :

$$f = 1/\pi\gamma\mu\delta^2$$

$\delta$: épaisseur du tube externe
$\gamma$: conductivité électrique du tube externe
$\mu$: perméabilité magnétique du tube externe
$f$: fréquence

Pour certains matériaux particuliers comme l'acier une difficulté supplémentaire pour les calculs est le fait que la perméabilité magnétique dépend du champ magnétique dans lequel il est placé.

L'utilisation la plus courante est entre 0.01 et 10Hz. En effet, si on est capable de générer des champs magnétiques très importants on peut quand même chauffer notablement, même avec des épaisseurs de tube externe importante et des fréquences très basse de 0.01Hz ou moins.

L'épaisseur maximum que l'on peut traverser dépend de la puissance utile souhaitée. Pour des tubes en acier ferromagnétique le rendement de l'opération de chauffage augmente avec le champ magnétique appliqué. Il faut donc vérifier si au champ magnétique et à la puissance maximum qu'il est possible de générer en faisant varier la fréquence on arrive à augmenter le rendement suffisamment pour obtenir la puissance utile souhaitée.

A titre illustratif, pour des conduites internes et externes en acier de construction de type ASTM A512 de capacité thermique d'environ 1 W/m$^2$/K, d'épaisseurs pour la conduite externe allant de 10 à 20mm, d'épaisseur du tube interne de plus de 10mm et si l'on applique des champs magnétiques de l'ordre de 0.1 à 0.2T sur plusieurs mètres on peut obtenir une puissance de chauffage du tube interne allant jusqu'à plus de 50kW par mètre de bobinage et avec un rendement hors pertes de production et transport de l'énergie jusqu'à l'inducteur meilleur que 20%. Pour des conduites interne de diamètre externe entre 4" et 12" avec une source de courant de puissance de l'ordre de 800kW ceci permet de chauffer par jour à +40°C au-dessus de la température ambiante de l'eau de mer jusqu'à 1.5km de conduite interne de 12" remplie d'eau ou 10km de conduite interne 4" remplie d'eau.

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 est une vue schématique en coupe transversale d'une conduite sous-marine de type PIP
- la figure 1A est une courbe représentant les pertes par effet Joule dans le tube interne en fonction de la fréquence du courant dans une bobine coaxiale entourant le tube externe de la conduite PIP,
- la figure 1B est une courbe représentant les pertes par effet Joule dans le tube externe en fonction de la fréquence du courant dans une bobine coaxiale entourant le tube externe de la conduite PIP, et
- le figure 1C est une courbe représentant l'efficacité énergétique en fonction de la fréquence du courant dans une bobine coaxiale entourant le tube externe de la conduite PIP,
- la figure 2 est une vue schématique d'une installation de chauffage par induction apte à être déplacée le long de la conduite PIP;
- la figure 2A montre une variante de dispositif mobile de chauffage par induction,
- la figure 3 est une vue schématique d'une bobine apte à former une installation de chauffage par induction amovible apte à être rapportée autour d'une conduite PIP, et
- la figure 3A montre une variante de dispositif mobile de chauffage par induction avec une bobine 5 amovible.

Exemple 1 :

On décrit ici un exemple de système de chauffage local mobile par induction d'une conduite PIP 1 (pipe in pipe) en acier de type ASTM A512 capable de chauffer à 40°C une ligne de longueur de l'ordre de 3km par jour. Il s'agit d'une ligne de tube interne 12" rempli d'eau. Le fluide contenu dans la ligne est en général de capacité thermique supérieure à l'eau. Cet exemple est donné à titre illustratif.

On souhaite chauffer la conduite interne 1a à 40°C au-dessus de la température de l'eau de mer en moins de 10min sur une distance de l'ordre de 10m ce qui permettrait de parcourir 1.5km/jours/machine environ.

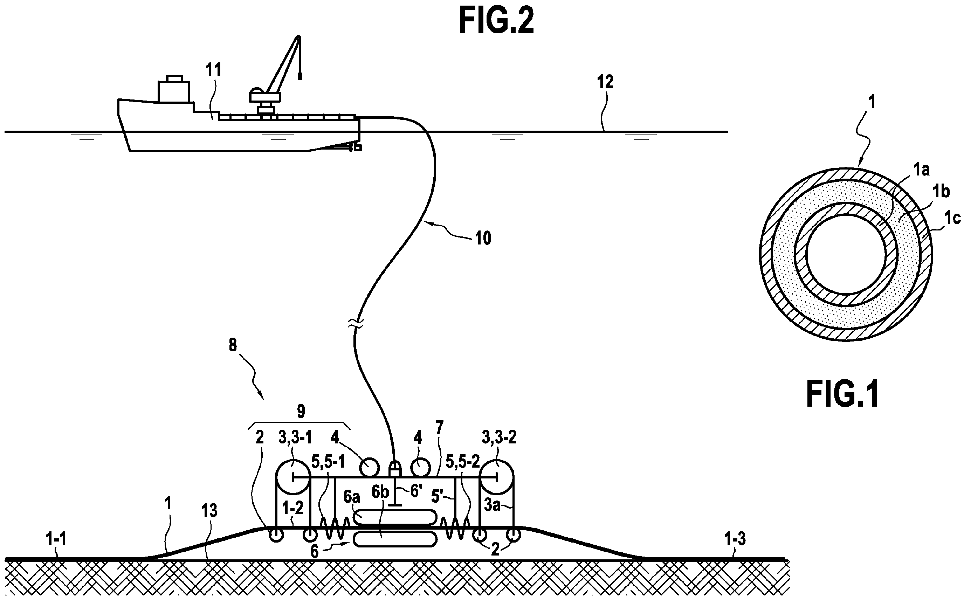

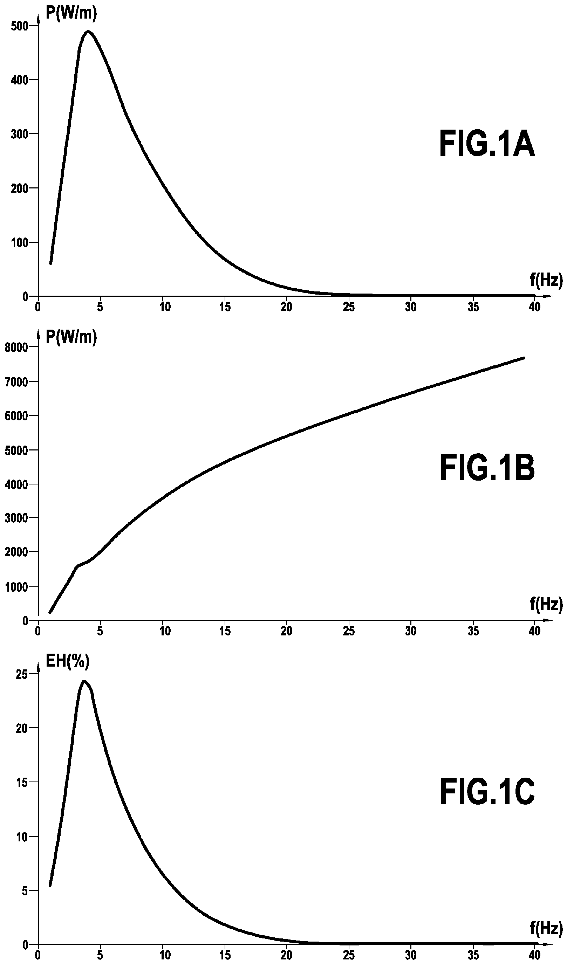

Le PIP comprend une conduite externe 1c, une isolation thermique annulaire 1b à base d'aérogel et une conduite interne 1a tel que montré figure 1. Le temps de refroidissement du tube interne de 40° à 20°C est de 24h.

2 machines permettraient de rétablir l'intégralité du système en cas de défaillance totale du système de chauffage tracé électrique.

Les dimensions des conduites interne et externe utilisées sont données ci-après dans le tableau dans lequel ID= diamètre interne, OD=diamètre externe.

Tableau 1 : Dimensions du PIP

| Dimensions PIP | |
|---|---|
| conduite interne | |
| ID(mm)<br>OD(mm) | 279.4<br>323 |
| Conduite externe | |
| ID(mm)<br>OD(mm) | 412.6<br>445.4 |
| Bobine | |
| ID(mm)<br>OD(mm) | 460<br>480 |

L'énergie utile pour le chauffage est l'énergie dégagée par effet Joule par le tube interne. La conduite interne est suffisamment isolée pour que durant tout le temps de la chauffe de la portion de 10m de ligne par la machine l'énergie dégagée par conduction soit négligeable. Toute l'énergie dégagée par effet Joule par la conduite externe ou la bobine d'induction est considéré comme perdue. Les constantes des matériaux utilisés sont celles des tableaux 2 et 3 suivants.

Tableau 2 : Propriétés thermiques utilisées

| Capacité thermique PIP | Densité (kg/m$^3$) | Cp (J/kg/K) |
|---|---|---|
| Acier | 7850 | 470 |
| Fluide | 1000 | 4185 |

La conduite interne est isolée de l'eau de mer avec une isolation thermique de Uvalue d'environ 1 Wm-$^{2}$K$^{-1}$.

Tableau 3 : Propriétés électromagnétiques des matériaux utilisés

| Propriétés électriques | Conductivité électrique (S/m) | Résistivité (Ohm.m) |
|---|---|---|
| Cuivre (spires) | 5.80E+07 | 1.72E-08 |
| Acier (tube interne) | 2.00E+06 | 5.00E-07 |

Sur la figure 1C : l'efficacité énergétique en fonction de la fréquence est calculée en calculant le rapport de la puissance totale dégagée par effet Joule dans le tube interne et de la puissance totale fournie.

Les courbes des figures 1A à 1C montrent que le chauffage par induction de la conduite interne de ce pipe in pipe est possible si l'on envoie dans la bobine entourant la conduite externe un courant à la fréquence précise de maximum d'efficacité de 25% de l'ordre de 4 Hz correspondant à une puissance utile de chauffe par effet joule de 25 kW par mètre de bobine, soit une puissance totale de 10x25=250kW. Cette valeur rend faisable le projet car la puissance nécessaire pour réaliser le chauffage d'une rame de conduite de 10m en 10min est inférieure à 250kW.

Exemple 2 : Dispositif mobile de chauffage par induction.

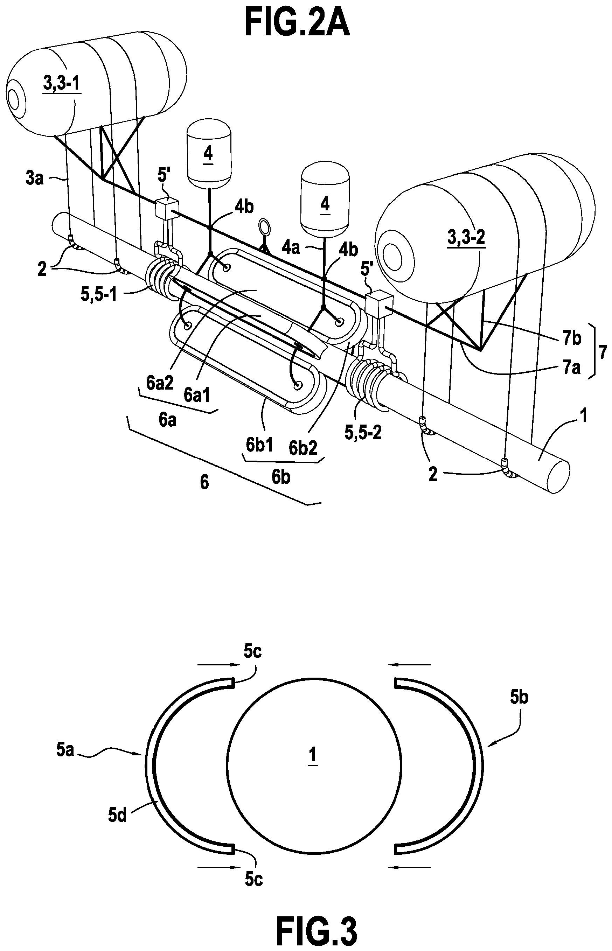

Sur la figure 2 on a représenté un dispositif mobile de chauffage par induction 8 capable de chauffer jusqu'à 10km de ligne/jour selon les diamètres de conduites, puissance disponible et puissance de chauffage requises.

Lors du redémarrage de la ligne chaque dispositif mobile 8 chauffe au préalable la conduite PIP 1 à +40°C au-dessus de la température ambiante pour détruire les bouchons d'hydrates.

Le dispositif mobile de chauffage par induction 8 peut être préinstallé lors de la pose de la conduite PIP 1 ou installé sur la conduite 1 reposant au fond la mer comme décrit à l'exemple 3.

En opération le dispositif mobile 8 est entièrement soulevé au-dessus du sol 13 par déballastage contrôlé de bouées 3, 4 décrites ci-après.

Les éléments principaux du dispositif mobile de chauffage par induction 8 sont:

- une structure support rigide 7,
- deux bobines d'induction 5, 5-1 et 5-2, espacées dans la direction longitudinale de la conduite disposées coaxialement à la conduite externe et permettant de générer le champ magnétique variable nécessaire au chauffage de la conduite interne, les bobines 5 étant solidaires de ladite structure support 7
- des premières bouées 3, 3-1 et 3-2 respectivement an aval de la première bobine 5-1 et en amont de la deuxième bobine 5-2, les premières bouées 3 étant solidaires de ladite structure support 7 et aptes à soulever ladite structure support 7 et la conduite 1,
- des deuxièmes bouées 4 de type Trelleborg subsea buoyancy solidaires de la structure support 7 et permettant de contrôler par déballastage contrôlé le soulèvement de la structure support 7 par rapport au sol marin 13;
- des rouleaux 2 disposés en sous face de la conduite externe de la ligne 1 et suspendus aux premières bouées 3 via des liens 3a, les rouleaux 2 supportant la ligne 1 et étant aptes à permettre le déplacement relatif de la ligne 1 par coulissement relatif de la conduite 1 sur les rouleaux 2 lorsque la conduite 1 et la structure support 7 sont soulevées à l'aide des premières bouées 3, le dispositif mobile 8 est déplacé en translation relative par rapport à la ligne 1,
- un dispositif à chenilles 6 supporté par la structure support 7 permettant de faire avancer le dispositif mobile 8 le long de la conduite PIP 1, des chenilles supérieure 6a et inférieure 6b aptes à venir coincer la conduite entre elles par déplacement radial relatif par rapport à la conduite avec des moyens de déplacement radial relatif 6'.

La structure support 7 supporte donc directement les bobines 5 et le dispositif à chenilles 6 et indirectement la conduite 1 via les rouleaux 2.

Le dispositif à chenilles 6 est du type pipe tensionneur à motorisation hydraulique (Huisman, 4C Offshore).

Un transformateur sur le bateau 11 en surface 12 permet de transformer la puissance électrique 400V AC triphasé, 50Hz du bateau 11 en surface 12 en puissance équivalente à une tension supérieure à 10kV ou plus selon la distance entre le bateau et la machine 8 pour un transport avec peu de pertes de puissance. Ce transport de l'électricité peut être réalisé par un ombilical, en général un câble rempli d'huile à forte capacité d'isolation électrique. La machine 8 devra disposer d'une source de courant AC placée dans un environnement étanche permettant de générer le courant AC monophasé de 0.1-50Hz permettant de faire fonctionner de manière optimale l'inducteur. La machine 8 est reliée au bateau par un ombilical 10 comprenant un câble sous-marin apportant la puissance électrique et hydraulique pour le fonctionnement du module d'induction et le module de déplacement.

Le procédé de mise en œuvre du dispositif mobile de chauffage par induction 8 comprend donc les étapes suivantes dans lesquelles:

- on soulève une portion longitudinale 1-2 de conduite 1 qui adopte une forme en dos d'âne avec deux portions de conduites 1-1 et 1-3 reposant sur le sol 13 de part et d'autre de la portion 1-2 formant une bosse surélevée au-dessus du sol marin 13,
- on applique les chenilles 6 en appui contre la conduite 1,
- on applique les bobines 5 autour de la conduite 1,
- on actionne les chenilles 6 ce qui provoque le déplacement relatif de l'ensemble du dispositif de chauffage 8 (comprenant la structure 7 et les éléments 2, 3, 4, 5 et 6 qui lui sont solidaires) le long de la conduite en déplaçant concomitamment la partie en dos d'âne surélevée le long de la conduite 1.

Dans une variante, sur la figure 2A, la structure support 7 comprend des tiges rigides 7a, 7b qui supportent et relient solidairement entre elles les bouées 3-1 et 3-2. Les deux bouées 3-1 et 3-2 supportent chacune un lien 3a avec une pluralité de petits rouleaux 2 montés en chapelet sur le lien 3a et en sous face de la conduite 1. Le chenillard 6 disposé entre les deux bobines 5-1 et 5-2 comprend des chenilles du type à bande sans fin aptes à être plaquées contre la conduite par un actionneur 6' non représenté, à savoir: 2 chenilles supérieures 6a1, 6a2 et deux chenilles inférieures 6b1, 6b2. La structure support 7 supporte les deux bobines 5 via des modules support 5'. Les deuxièmes bouées 4 supportent le chenillard 6 via des tiges verticales rigides 4a solidaires en 4b de la tige rigide horizontale 7a de la structure support 7.

Les bobines 5 sont constituées de bobines simples couche ou double couche selon la puissance requise, avec des spires sous forme de tubes de cuivre refroidis par eau par exemple. Les bobines sont placées dans une chambre remplie d'un fluide spécialement conçu qui n'est pas en contact avec l'eau de mer.

Dans les exemples 2A et 2B ci-après, les conduites de la conduite PIP sont constituées des matériaux de l'exemple 1 et configurées pour une durée de refroidissement en 24h de +40°C à 20°C avec des conduite interne et conduite externe en acier de capacité thermique $1W/m^2/K$ pour permettre de traiter une conduite PIP de 12km en 24h. Les conduites internes sont remplies d'eau.

Exemple d'application 2A :

- machine 8 préinstallée sur le tube
- conduite interne : diamètre externe 4" et épaisseur 10mm,
- conduite externe : diamètre externe 8" et épaisseur 10mm,
- Inducteurs : 2 bobines 5 de 1m, permettant de générer un champ magnétique de 0.1T et permettant chacune de générer une puissance utile de 50kW
- Source AC 400kW à fréquence 4Hz et puissance utile 100kW
- Vitesse de déplacement du dispositif 8: 5.6 km/jour.

Exemple d'application 2B :

- machine 8 préinstallée sur le tube
- conduite interne : diamètre externe 12" et épaisseur 20mm,
- conduite externe : diamètre externe 16" et épaisseur 15mm,
- Inducteurs : 2 bobines 5 de 2m permettant de générer un champ magnétique de 0.1T environ et permettant chacune de générer une puissance utile de 100kW
- Source AC 800kW à fréquence 2Hz. Puissance utile 200kW
- Vitesse de déplacement du dispositif 8 : 1.5km/jour.

Exemple 3 : Dispositif de chauffage par induction amovible.

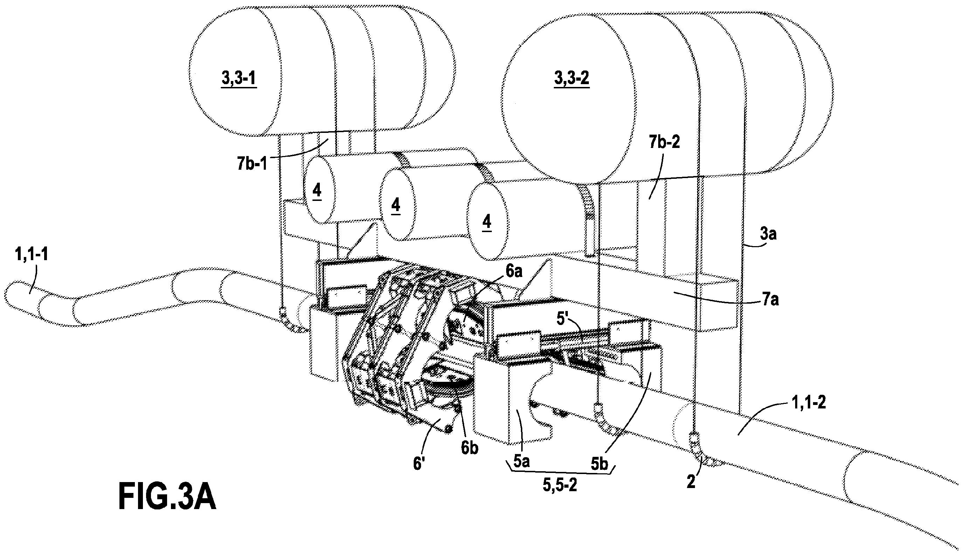

Il s'agit d'un dispositif que l'on peut rapporter localement sur une conduite reposant au fond de la mer pour un chauffage ponctuel, mais il peut également être appliqué dans le cadre d'un dispositif mobile tel que décrit à l'exemple 2 et sur la figure 3A.

La bobine d'induction 5 telle que montrée schématiquement figure 3 comprend deux parties symétriques demies-cylindriques 5a, 5b aptes à entourer la conduite PIP et que l'on vient raccorder l'une à l'autre à l'aide de connecteurs électriques 5c en bout de demies-spires 5d qu'elles supportent.

Ces demies-bobines demies-cylindriques sont préparées comme décrit ci-après.

On utilise des tubes de cuivre de section ronde de l'ordre de 1000mm$^2$ ou plus et des courants de l'ordre de 10000A pour n'avoir qu'une seule couche de tubes conducteurs à connecter.

La connexion des deux parties 5a et 5b se fait par des connecteurs plats 5c ou connecteurs s'emboitant l'un dans l'autre de section plus grande. Les circuits de refroidissement d'eau peuvent être indépendants pour les deux parties de la bobine.

Les étapes de fabrication comprennent :

- le pliage du tube cuivre en spires de bobine standard,
- la découpe de la bobine obtenue dans un plan axial, et
- le soudage des connecteurs plats 5c de chaque côté des demies spires 5d.

Dans le dispositif mobile de la figure 3A, les deux demi-bobines 5a, 5b sont montées aptes à être déplacées en translation relative sur un bâti transversal 5' sous la poutre horizontale 7a de la structure support 7.

Ainsi il est possible de venir monter les bobines 5 autour de la conduite 1 après soulèvement de la conduite 1 par les bouées 3 et 4 sans nécessiter de les préinstaller.

Plus précisément sur la figure 3A, la structure support 7 est constituée de 3 parties 7a, 7b-1 et 7b-2 initialement indépendantes et rendues solidaires avant opération.

Des poutres verticales 7b-1 et 7b-2 sont solidaires chacune des premières bouées 3-1 et respectivement3-2. Une poutre horizontale 7a solidaire de deuxièmes bouées 4 supporte les bobines 5 et les chenilles 6.

Initialement, les bouées 3-1 et 3-2 avec les poutres 7b-1 et 7b-2 sont mises en œuvre de façon à soulever la portion 1-2 de conduite 1. Pour ce faire on les positionne espacées le long et au-dessus de la conduite à l'aide d'un ROV non représenté et on dispose les liens 3a supportées par les bouées 3 autour de la conduite 1 avec les rouleaux 2 en sous face de la conduite.

Ensuite, on vient positionner la poutre centrale horizontale 7a munie de ses bouées 4 entre les poutres verticales 7b-1 et 7b-2 de façon à positionner les bobines 5 et chenilles 6 autour de la conduite 1. Pour ce faire, une fois en position, on actionne en translation les demies-bobines 5a, 5b pour former des bobines 5 disposées coaxialement autour de la conduite 1 et on actionne radialement les chenilles 6a et 6b en appui conte la conduite 1 avec l'actionneur 6' et on fixe les poutres 7b-1 et 7b-2 sur la poutre centrale 7a celles-ci de manière à former une structure support commune 7.

**Revendications**

1. Procédé de chauffage d'une conduite interne d'un ensemble de conduites coaxiales sous-marines de type PIP en acier comprenant une conduite interne en acier et une conduite externe en acier coaxiale à la conduite interne, un espace annulaire entre les conduites interne et externe comprenant une isolation thermique annulaire (1b), **caractérisé en ce que** l'on réalise un chauffage par induction de la conduite interne à l'aide d'une bobine d'induction électromagnétique (5) entourant coaxialement la conduite externe, avec un courant parcourant la bobine de fréquence inférieure à 100Hz optimale pour une efficacité énergétique maximale de chauffage par effet joule de la conduite interne, de préférence une fréquence de 0.1Hz à 10Hz.

2. Procédé selon la revendication 1, **caractérisé en ce que** la bobine d'induction électromagnétique génère un champ magnétique de valeur H d'au moins 0,1 Tesla de préférence de 0.1 à 0.2 Tesla avec un courant de fréquence optimale entre 1Hz à 10Hz pour obtenir une puissance de chauffe de la conduite interne de 1 à 200kW, de préférence d'au moins 5 kW.

3. Procédé selon l'une des revendications 1 à 2, **caractérisé en ce que** les dites conduites présentent les caractéristiques suivantes :

   - le diamètre externe de dite conduite interne (1a) est de 5 à 40cm,
   - le diamètre externe de dite conduite externe (1c) est de 7.5 à 50cm,
   - les épaisseurs des dites conduite interne et conduite externe sont de 10 à 30 mm, la conduite externe étant de préférence d'épaisseur du même ordre que celle de la conduite interne.

4. Procédé selon l'une des revendications 1 à 3, **caractérisé en ce que** l'on chauffe la conduite interne d'un ensemble de deux conduites coaxiales de type PIP sous-marines (1) pour maintenir sa température à au moins 20°C au-dessus de la température de l'eau environnant la conduite externe et ce pour une durée donnée de préférence d'au moins 24h.

**5.** Procédé selon l'une des revendications 1 à 4, **caractérisé en ce que** l'on chauffe la conduite interne à 40°C, les conduites interne et externe en acier présentant les caractéristiques de capacité thermique des aciers des conduites et d'isolation thermique de l'espace annulaire (1b) entre les conduite interne et externe telles que la durée de refroidissement de 40°C à 20°C est d'au moins 24h.

**6.** Procédé selon l'une des revendications 1 à 5, **caractérisé en ce que** l'on met en œuvre un dispositif mobile (8) de chauffage par induction comprenant au moins une dite bobine d'induction électromagnétique (5) entourant coaxialement la conduite externe, et l'on déplace ledit dispositif mobile de chauffage le long dudit ensemble de conduites coaxiales, de préférence à une vitesse d'au moins 1 km/jour.

**7.** Procédé selon la revendication 6, **caractérisé en ce que** l'on chauffe la conduite interne à une température T2 avec un dispositif mobile de chauffage par induction comprenant une dite bobine d'induction électromagnétique entourant coaxialement la conduite externe, et on déplace ledit dispositif mobile de chauffage à une vitesse d'au moins n km/jour de sorte que la température de la conduite interne d'une longueur donnée de conduite reste supérieure à T1 inférieure à T2, T2-T1 étant supérieure à la diminution de température de la conduite interne en une journée, de préférence T1 étant supérieure à 20°C et T2 supérieure à 40°C.

**8.** Procédé selon l'une des revendications 6 ou 7, **caractérisé en ce qu'**on effectue les étapes suivantes dans lesquelles :

a) on soulève une portion (1-2) de conduites coaxiales (1) reposant sur le sol marin (13) la dite portion de conduite comprenant au moins une dite bobine d'induction (5) disposée coaxialement autour de la conduite externe, et
b) on déplace un dispositif mobile (8) de chauffage par induction comprenant au moins une dite bobine d'induction électromagnétique (5) en déplacement relatif le long et par rapport aux dites conduites coaxiales (1) avec progression du déplacement concomitant d'une nouvelle portion surélevée (1-2) de conduites coaxiales.

**9.** Procédé selon l'une des revendications 1 à 8, **caractérisé en ce qu'**on l'on met en œuvre un dispositif amovible de chauffage par induction apte à être appliqué sur des conduites coaxiales reposant au fond de la mer, comprenant une dite bobine d'induction électromagnétique comprenant deux parties (5d) de bobines demies-cylindriques indépendantes aptes à être solidarisées pour former une bobine coaxiale entourant la dite conduite externe en soulèvement par rapport au sol marin.

**10.** Dispositif de chauffage par induction (8) d'une conduite interne de conduites coaxiales utile dans un procédé selon l'une des revendications 1 à 9 comprenant :

- des moyens de chauffage par induction comprenant au moins une bobine d'induction électromagnétique (5) entourant coaxialement la conduite externe de conduites coaxiales, et
- des moyens de soulèvement (9) au-dessus du sol marin (13) d'une portion (1-2) de conduites coaxiales (1) ainsi que de la (ou des) dite(s) bobine(s) d'induction (5) l'entourant.

**11.** Dispositif selon la revendication 10, **caractérisé en ce qu'**il s'agit d'un dispositif mobile comprenant en outre :

- des moyens de déplacement motorisé (6) aptes à permettre le déplacement relatif de la (ou des) dite(s) bobine(s) d'induction (5) coaxialement le long de la conduite externe des conduites coaxiales, et
- des dits moyens de soulèvement (9) au-dessus du sol marin (13) d'une portion (1-2) de conduites coaxiales (1) ainsi que de la (ou des) dite(s) bobine(s) d'induction (5) l'entourant et dits moyens de déplacements motorisé (6).

**12.** Dispositif selon l'une des revendications 10 ou 11, **caractérisé en ce que** les moyens de soulèvement comprennent des bouées (3,4) que l'on peut ballaster ou déballaster de manière contrôlée.

**13.** Dispositif selon l'une des revendications 11 ou 12, **caractérisé en ce que** les moyens de déplacement motorisé comprennent des dispositifs à chenilles (6) aptes à venir en appui contre la conduite externe et ainsi se déplacer le long de la conduite externe lorsqu'ils sont actionnés, la dite bobine coulissant coaxialement relativement à la dite conduite externe.

**14.** Dispositif selon l'une des revendications 11 à 13, **caractérisé en ce que** les dits moyens de soulèvement comprennent des roulettes (2) supportant la conduite externe et aptes à coulisser relativement à ladite conduite externe lorsque les dits moyens de déplacement motorisé sont actionnés; les dites roulettes dite bobine et dites chenilles étant suspendues à des bouées (3,4).

**15.** Dispositif selon l'une des revendications 10 à 14, **caractérisé en ce que** les dits moyens de soulèvement (3, 4,9) et les dites bobines, et dits moyens de déplacement motorisé (6), sont aptes à être solidarisés entre eux et supportés par une structure-support (7) commune.

**16.** Dispositif selon l'une des revendications 10 à 14, **caractérisé en ce que** ledit dispositif de chauffage par induction est amovible et apte à être appliqué sur des conduites coaxiales reposant au fond de la mer comprenant une dite bobine d'induction électromagnétique comprenant deux parties (5d) de bobines demies-cylindriques indépendantes aptes à être solidarisées pour former une bobine coaxiale entourant la dite conduite externe.

**17.** Dispositif selon la revendication 16, **caractérisé en ce que** les deux parties (5a, 5b) de bobines demies-cylindriques indépendantes sont montées aptes à être déplacées en translation relative transversale l'une par rapport à l'autre pour permettre de les installer sur une conduite en soulèvement par rapport au sol marin pour former une bobine coaxiale entourant la dite conduite externe.


**Patentansprüche**

**1.** Verfahren zum Erwärmen eines Innenrohrs einer Anordnung von koaxialen Unterwasserrohren vom Typ PIP aus Stahl, umfassend ein besagtes Innenrohr aus Stahl und ein Außenrohr aus Stahl, das koaxial mit dem Innenrohr ist, wobei ein ringförmiger Raum zwischen dem Innen- und dem Außenrohr eine ringförmige thermische Isolierung (1b) umfasst, **dadurch gekennzeichnet, dass** eine Induktionserwärmung des Innenrohrs mittels einer elektromagnetischen Induktionsspule (5) durchgeführt wird, die das Außenrohr koaxial umgibt, wobei ein Strom durch die Spule mit einer Frequenz von weniger als 100 Hz fließt, die für eine maximale Energieeffizienz der Erwärmung des Innenrohrs durch den Joule-Effekt optimal ist, bevorzugt eine Frequenz von 0,1 Hz bis 10 Hz.

**2.** Verfahren nach Anspruch 1, **dadurch gekennzeichnet, dass** die elektromagnetische Induktionsspule ein Magnetfeld mit einem Wert H von mindestens 0,1 Tesla, bevorzugt 0,1 bis 0,2 Tesla, mit einem Strom mit einer optimalen Frequenz zwischen 1 Hz und 10 Hz erzeugt, um eine Erwärmungsleistung des Innenrohrs von 1 bis 200 kW, bevorzugt mindestens 5 kW zu erreichen.

**3.** Verfahren nach einem der Ansprüche 1 bis 2, **dadurch gekennzeichnet, dass** die Rohre die folgenden Merkmale aufweisen:

- der Außendurchmesser des Innenrohrs (1a) beträgt 5 bis 40 cm,
- der Außendurchmesser des Außenrohrs (1c) beträgt 7,5 bis 50 cm,
- die Dicken des Innen- und Außenrohrs betragen 10 bis 30 mm, wobei das Außenrohr bevorzugt eine Dicke derselben Größenordnung wie das Innenrohr aufweist.

**4.** Verfahren nach einem der Ansprüche 1 bis 3, **dadurch gekennzeichnet, dass** das Innenrohr einer Anordnung von zwei koaxialen Unterwasserrohren vom Typ PIP (1) erwärmt wird, um seine Temperatur mindestens 20 °C über der Temperatur des das Außenrohr umgebenden Wassers für eine bestimmte Zeitspanne, vorzugsweise mindestens 24 Stunden, zu halten.

**5.** Verfahren nach einem der Ansprüche 1 bis 4, **dadurch gekennzeichnet, dass** das Innenrohr auf 40 °C erwärmt wird, wobei das Innen- und das Außenrohr aus Stahl solche Merkmale der Wärmekapazität der Rohrstähle und der thermischen Isolierung des ringförmigen Raums (1b) zwischen dem Innen- und dem Außenrohr aufweisen, dass die Abkühlzeit von 40 °C auf 20 °C mindestens 24 Stunden beträgt.

**6.** Verfahren nach einem der Ansprüche 1 bis 5, **dadurch gekennzeichnet, dass** eine mobile Vorrichtung (8) zur Induktionserwärmung verwendet wird, die mindestens eine der genannten elektromagnetischen Induktionsspulen (5) umfasst, die das Außenrohr koaxial umgibt, und dass die mobile Vorrichtung zur Erwärmung entlang der Anordnung von koaxialen Rohren verschoben wird, bevorzugt mit einer Geschwindigkeit von mindestens 1 km/Tag.

7. Verfahren nach Anspruch 6, **dadurch gekennzeichnet, dass** das Innenrohr mit einer mobilen Vorrichtung zur Induktionserwärmung, die eine das Außenrohr koaxial umgebende elektromagnetische Induktionsspule umfasst, auf eine Temperatur T2 erwärmt wird und die mobile Vorrichtung zur Erwärmung mit einer Geschwindigkeit von mindestens n km/Tag verschoben wird, sodass die Temperatur des Innenrohrs einer gegebenen Rohrlänge höher als T1 und niedriger als T2 bleibt, wobei T2-T1 höher ist als die Temperaturabnahme des Innenrohrs an einem Tag, wobei bevorzugt T1 höher als 20 °C und T2 höher als 40 °C ist.

8. Verfahren nach einem der Ansprüche 6 oder 7, **dadurch gekennzeichnet, dass** die folgenden Schritte durchgeführt werden, in denen:

a) ein Abschnitt (1-2) von koaxialen Rohren (1), die auf dem Meeresboden (13) ruhen, angehoben wird, wobei dieser Rohrabschnitt mindestens eine der genannten Induktionsspulen (5) umfasst, die koaxial um das Außenrohr angeordnet ist, und

b) eine mobile Vorrichtung (8) zur Induktionserwärmung, die mindestens eine der genannten elektromagnetischen Induktionsspulen (5) umfasst, in Relativverschiebung entlang und in Bezug auf die genannten koaxialen Rohre (1) verschoben wird, wobei gleichzeitig die Verschiebung eines neuen erhöhten Abschnitts (1-2) der koaxialen Rohre vorangetrieben wird.

9. Verfahren nach einem der Ansprüche 1 bis 8, **dadurch gekennzeichnet, dass** eine abnehmbare Vorrichtung zur Induktionserwärmung implementiert wird, die auf koaxiale Rohre, die auf dem Meeresboden ruhen, angewendet werden kann, umfassend eine besagte elektromagnetische Induktionsspule, die zwei Teile (5d) unabhängiger halbzylindrischer Spulen umfasst, die miteinander verbunden werden können, um eine koaxiale Spule zu bilden, die das besagte Außenrohr umgibt, wenn es vom Meeresboden angehoben wird.

10. Vorrichtung zur Induktionserwärmung (8) eines Innenrohrs von koaxialen Rohren, die in einem Verfahren nach einem der Ansprüche 1 bis 9 verwendbar ist, umfassend:

- Mittel zur Induktionserwärmung, umfassend mindestens eine elektromagnetische Induktionsspule (5), die das Außenrohr der koaxialen Rohre koaxial umgibt, und
- Mittel zum Anheben (9) eines Teils (1-2) der koaxialen Rohre (1) und der sie umgebenden Induktionsspule(n) (5) über den Meeresboden (13).

11. Vorrichtung nach Anspruch 10, **dadurch gekennzeichnet, dass** es sich um eine mobile Vorrichtung handelt, ferner umfassend:

- motorisierte Verschiebemittel (6), die geeignet sind, eine relative Verschiebung der Induktionsspule(n) (5) koaxial entlang des Außenrohrs der koaxialen Rohre zu ermöglichen, und
- besagte Mittel zum Anheben (9) eines Teils (1-2) der koaxialen Rohre (1) sowie der sie umgebenden Induktionsspule(n) (5) und der motorisierten Verschiebemittel (6) über den Meeresboden (13).

12. Vorrichtung nach einem der Ansprüche 10 oder 11, **dadurch gekennzeichnet, dass** die Mittel zum Anheben Schwimmkörper (3, 4) umfassen, die kontrolliert ballastiert oder entballastiert werden können.

13. Vorrichtung nach einem der Ansprüche 11 oder 12, **dadurch gekennzeichnet, dass** die motorisierten Verschiebemittel Raupenvorrichtungen (6) umfassen, die geeignet sind, an dem Außenrohr anzuliegen und somit entlang des Außenrohrs verschoben zu werden, wenn sie betätigt werden, wobei die Spule koaxial relativ zu dem Außenrohr gleitet.

14. Vorrichtung nach einem der Ansprüche 11 bis 13, **dadurch gekennzeichnet, dass** die Mittel zum Anheben Rollen (2) umfassen, die das Außenrohr tragen und geeignet sind, relativ zum Außenrohr zu gleiten, wenn die motorisierten Verschiebemittel betätigt werden; wobei die Rollen, die Spule und die Raupen an Schwimmkörpern (3, 4) aufgehängt sind.

15. Vorrichtung nach einem der Ansprüche 10 bis 14, **dadurch gekennzeichnet, dass** die Mittel zum Anheben (3, 4, 9) und die Spulen sowie die motorisierten Verschiebemittel (6) geeignet sind, miteinander verbunden zu werden und von einer gemeinsamen Tragstruktur (7) getragen werden.

16. Vorrichtung nach einem der Ansprüche 10 bis 14, **dadurch gekennzeichnet, dass** die Vorrichtung zur Induktionserwärmung abnehmbar und geeignet ist, an koaxialen Rohren, die auf dem Meeresboden liegen, angebracht zu werden, umfassend eine besagte elektromagnetische Induktionsspule, die zwei Teile (5d) unabhängiger halbzylindrischer Spulen umfasst, die miteinander verbunden werden können, um eine koaxiale Spule zu bilden, die das Außenrohr umgibt.

17. Vorrichtung nach Anspruch 16, **dadurch gekennzeichnet, dass** die beiden Teile (5a, 5b) unabhängiger halbzylindrischer Spulen so montiert sind, dass sie in relativer Translation quer zueinander verschoben werden können, um ihre Installation auf einem in Bezug auf den Meeresboden angehobenen Rohr zu ermöglichen, um eine koaxiale Spule zu bilden, die das Außenrohr umgibt.

**Claims**

1. A method of heating an inner pipe of a set of undersea coaxial steel pipes of the PIP type comprising an inner steel pipe and an outer steel pipe coaxial to the inner pipe, an annular space between the inner and outer pipes comprising an annular thermally insulation (1b), **characterized in that** the inner pipe is heated by induction using an electromagnetic induction coil (5) surrounding the outer pipe coaxially, a current flowing through the coil having a frequency lower than 100 Hz optimized for maximum energy efficiency of Joule effect heating of the inner pipe, preferably at a frequency in the range 0.1 Hz to 10 Hz.

2. A method according to claim 1, **characterized in that** the electromagnetic induction coil generates a magnetic field of strength H of at least 0.1 Telsa, preferably in the range 0.1 to 0.2 Telsa with a current at an optimum frequency in the range 1 Hz to 10 Hz in order to obtain heating power of the inner pipe in the range 1 kW to 200 kW, preferably of at least 5 kW.

3. A method according to claim 1 or claim 2, **characterized in that** said pipes present the following characteristics:

   - outside diameter of said inner pipe (1a) lies in the range 5 cm to 40 cm;
   - outside diameter of said outer pipe (1c) lies in the range 7.5 cm to 50 cm; and
   - the thicknesses of said inner and outer pipes lie in the range 10 mm to 30 mm, the outer pipe preferably having thickness of the same order as the thickness of the inner pipe.

4. A method according to any one of claims 1 to 3, **characterized in that** the inner pipe of a set of two undersea PIP type coaxial pipes (1) is heated so as to maintain its temperature at at least 20°C above the temperature of the water surrounding the outer pipe and to do so for a given duration that is preferably at least 24 h.

5. A method according to any one of claims 1 to 4, **characterized in that** the inner pipe is heated to 40°C, the inner and outer steel pipes presenting the thermal capacity characteristics of pipe steels and the thermal insulation of the annular space (1b) between the inner and outer pipes being such that the time required for cooling from 40°C to 20°C is at least 24 h.

6. A method according to any one of claims 1 to 5, **characterized in that** a movable induction heater device (8) is used comprising at least one said electromagnetic induction coil (5) surrounding the outer pipe coaxially, and said movable heater device is moved along said set of coaxial pipes, preferably at a speed of at least 1 km/day.

7. A method according to claim 6, **characterized in that** the inner pipe is heated to a temperature T2 with a movable induction heater device including a said electromagnetic induction coil surrounding the outer pipe coaxially, and said movable heater device is moved at a speed of at least n km/day so that the temperature of the inner pipe for a given length of pipe remains greater than T1 less than T2, where T2-T1 is greater than the temperature drop of the inner pipe over one day, T1 preferably being greater than 20°C and T2 preferably being greater than 40°C.

8. A method according to claim 6 or claim 7, **characterized in that** the following steps are performed:

   a) raising a portion (1-2) of coaxial pipes (1) resting on the sea bed (13), said pipe portion having at least one said induction coil (5) arranged coaxially around the outer pipe; and
   b) moving a movable induction heater device (8) that includes at least one said electromagnetic induction coil (5) lengthwise relative to and along said coaxial pipes (1) while simultaneously raising a new portion (1-2) of said coaxial pipes.

9.  A method according to any one of claims 1 to 8, **characterized in that** a removable induction heater device is used that is suitable for being applied on coaxial pipes resting on the sea bottom, said device including a said electromagnetic induction coil comprising two independent semi-cylindrical coil portions (5d) suitable for being secured to each other in order to form a coaxial coil surrounding said outer pipe when raised above the sea bed.

10. A device (8) for induction heating an inner pipe of coaxial pipes, the device being suitable for use in a method according to any one of claims 1 to 9, and comprising:

    - induction heater means comprising at least one electromagnetic induction coil (5) coaxially surrounding the outer pipe of the coaxial pipes; and
    - raising means (9) for raising a portion (1-2) of coaxial pipes (1) above the sea bed (13) together with said induction coil(s) (5) surrounding it.

11. A device according to claim 10, **characterized in that** it is a movable device, further comprising:

    - motor-driven movement means (6) suitable for enabling said induction coil(s) (5) to move coaxially along the outer pipe of the coaxial pipes; and
    - said raising means (9) for raising a portion (1-2) of coaxial pipes (1) above the sea bed (13) together with said induction coil(s) (5) surrounding it and said motor-driven movement means (6).

12. A device according to claim 10 or claim 11, **characterized in that** the raising means comprise buoys (3, 4) that can be ballasted or deballasted in controlled manner.

13. A device according to claim 11 or claim 12, **characterized in that** the motor-driven movement means comprise crawler devices (6) suitable for bearing against the outer pipe and thus for moving along the outer pipe when they are actuated, said coils sliding coaxially relative to said outer pipe.

14. A device according to any one of claims 11 to 13, **characterized in that** said raising means comprise rollers (2) supporting the outer pipe and suitable for sliding relative to said outer pipe when said motor-driven movement means are actuated; said rollers, said coils, and said crawlers being suspended from buoys (3, 4).

15. A device according to any one of claims 10 to 14, **characterized in that** said raising means (3, 4, 9) and said coils, and said motor-driven movement means (6), are suitable for being secured to one another and supported by a common support structure (7).

16. A device according to any one of claims 10 to 14, **characterized in that** said induction heater device is removable and is suitable for being applied on coaxial pipes resting on the sea bottom, the device including a said electromagnetic induction coil comprising two independent semi-cylindrical coil portions (5d) suitable for being secured to each other in order to form a coaxial coil surrounding said outer pipe.

17. A device according to claim 16, **characterized in that** the two independent semi-cylindrical coil portions (5a, 5b) are mounted so as to be suitable for being moved relative to each other in translation transversely so as to enable them to be installed on a pipe that is raised above the sea bed so as to form a coaxial coil surrounding said outer pipe.

# FIG.2

EP 3 535 518 B1

# FIG.1

FIG.1A

FIG.1B

FIG.1C

# FIG.2A

# FIG.3

FIG.3A

**RÉFÉRENCES CITÉES DANS LA DESCRIPTION**

**Documents brevets cités dans la description**

- US 6278096 B1
- US 2013098625 A1
- US 2013220996 A1
- US 2014305613 A1
- US 2012031621 A1
- US 6278096 B
- US 6278095 B